# EUROPÄISCHE PATENTANMELDUNG

(11) **EP 0 926 800 A2**
(43) Veröffentlichungstag der Anmeldung: **30.06.1999**
(21) Anmeldenummer: 98811249.6
(22) Anmeldetag: 21.12.1998
(51) Int. Cl.: H02K 1/16

(54) **Stator-Blechkörper für eine elektrische Maschine**

(30) Priorität: 23.12.1997 DE 19757451
(71) Anmelder: Asea Brown Boveri AG, 5401 Baden (CH)
(72) Erfinder: Joho, Reinhard, 5024 Küttigen (CH); Bock, Albrecht, 69517 Gorxheimertal (DE)
(74) Vertreter: Lück, Gert, Dr.

(57) **Zusammenfassung**

Bei einem Hochspannungsgenerator sind an der radialen Aussenseite des Stator-Blechkörpers in jedem Blechsegment (1) radial nach innen führende Kerben (3) vorgesehen, die in einer Entlastungsöffnung enden. Die Kerben (3) bewirken, dass die Amplitude und die Frequenz beispielsweise einer unter Betrieb auftretenden 4-Knoten-Schwingung auf unkritische Werte begrenzt wird, obwohl das Blechkörper hinsichtlich seiner Jochhöhe (J_{H}) mechanisch unterdimensioniert ist.

## Beschreibung

### TECHNISCHES GEBIET

Die vorliegende Erfindung bezieht sich auf das Gebiet der elektrischen Maschinen. Sie betrifft einen Stator-Blechkörper für eine rotierende elektrische Maschine, wie sie im Oberbegriff des Patentanspruchs 1 angegeben ist.

Eine solche elektrische Maschine ist z.B. bekannt aus 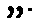 Konstruktion elektrischer Maschinen", E. Wiedemann und W. Kellenberger, Springer-Verlag, Berlin/`Heidelberg, 1967, Seite 337 - 339.

### STAND DER TECHNIK

Bei rotierenden Wechselstrommaschinen wie beispielsweise Generatoren oder Motoren rotieren Magnetfelder im Betrieb mit der Frequenz der Drehzahl. Diese Felder versuchen den Stator-Blechkörper bei zweipoligen Maschinen in eine rotierende Ellipse und bei vierpoligen Maschine in ein rotierendes Viereck zu verwandeln. Diese Verformungen des Stator-Blechkörpers sind mit eine Ursache für magnetische Geräusche und für Schwingungen des Statorgehäuses. Dabei stehen die Verformungen aber auch in direktem Zusammenhang mit den geometrischen Verhältnissen im Stator-Blechkörper. Mitbestimmende Grössen sind der Aussendurchmesser des Stator-Blechkörpers sowie die Jochhöhe des Blechkörpers. Weiteren Einfluss nimmt die Nuttiefe der am Innenumfang der Bohrung verteilten und zur Längsachse der Maschine ausgerichteten Nuten für die Aufnahme einer Statorwicklung.

Typische Ausführungen von 2-poligen Generatoren mit ihren unter Betriebsbedingung auftretenden sogenannten 4-Knotenschwingungen des Statorblechkörpers machen es erforderlich, dass der Blechkörper federnd in einem Statorgehäuse angeordnet wird. Die Ausnutzung der federnden Anordnung ist aber nicht zuletzt begrenzt durch die Festigkeit der ausserhalb des Stator-Blechkörpers angeordneten Wickelköpfe der Statorwicklung.

Besonders problematisch - und darauf zielt auch das Wesen der vorliegenden Erfindung - ist der Einsatz von Generatoren als Turbomaschinen in Hochspannungsnetzen, wobei hier unter Hochspannung eine weitaus grössere Spannung verstanden wird, als die heute gängigen Betriebsspannungen von 20-30 kV. Derartige Hochspannungsgeneratoren finden Verwendung im Spannungsbereich bis 400 kV oder höher, und werden unmittelbar - also ohne Zwischenschaltung eines Transformators - an ein Energieübertragungsnetz mit üblicher Spannungshöhe von beispielsweise 400 kV angeschlossen. Die Vorteile einer direkten Netzverbindung liegen vor allem in der Einsparung von Transformatoren und zugehörigen Schaltanlagen, inklusive Installationsraum und Wartungsaufwand.

Bei Hochspannungsgeneratoren ist aber eine grössere Windungsanzahl gegenüber konventionellen Maschinen eine Grundvorausetzung. Die grössere Anzahl Windungen muss demzufolge in tieferen Nuten eines Stator-Blechkörpers eingelegt werden. In der Schrift JP 1-126141 werden Kerben an der Aussenseite eines Stator-Blechkörpers offenbart, die mit einem permeablen Material ausgefüllt sind. Diese Ausführungsform bedeutet jedoch ein Mehraufwand an Material und somit an Kosten.

Bei der Jochhöhe - das ist der Abstand zwischen dem Nutgrund und dem Aussendurchmesser des Stator-Blechkörpers - darf ein Mindestmass hinsichtlich des durchströmenden magnetischen Flusses nicht unterschritten werden. Die Kombination aus tiefen Statornuten und hinsichtlich der Flussdichte ausgelegten Jochhöhen führt aber zu einem Betrieb in der Nähe der 4-Knoten-Eigenfrequenz und damit zu unzulässigen Amplituden bei den oben erwähnten 4-Knotenschwingungen. Die Amplituden der Schwingungen würden bis zu einer Grössenordnung von 150 µm anwachsen, was zur mechanischen Zerstörung der elektrischen Maschinen führen kann. Eine Verfestigung des StatorBlechkörpers mittels Durchmesservergrösserung ist im Hinblick auf einen wirtschaftlichen Transport durch das sogenannte Bahnprofil begrenzt.

### DARSTELLUNG DER ERFINDUNG

Es ist daher Aufgabe der Erfindung, einen Stator-Blechkörper für einen Hochspannungs-Turbogenerator der eingangs genannten Art so zu gestalten, dass bei einem vergleichsweise kleinen Aussendurchmesser des Stator-Blechkörpers und grossen Nuttiefen für die Statorwicklung eine genügend hohe mechanische Festigkeit gegenüber betriebsbedingten Schwingungsamplituden erreicht wird.

Erfindungsgemäss wird die Aufgabe durch die Merkmale des ersten Anspruchs gelöst.

Die Vorteile der Erfindung sind unter anderem darin zu sehen, dass durch die Kerben an der radialen Aussenseite der den Stator-Blechkörper bildenden Blechsegmente die Eigenfrequenz des Blechkörperes massgeblich herabgesetzt wird und unter die umlaufende Anregungsfrequenz zu liegen kommt, während die magnetischen Verhältnisse im Blechkörper weitgehend unbeeinflusst bleiben. Die Kerben sind nicht wie im Stand der Technik mit einem permeablen Material ausgefüllt, sondern mit Luft. Die Kerbung ermöglicht hier einen vergleichsweise kleinen Durchmesser des Stator-Blechkörpers, welches den magnetischen Teil eines Hochspannungsgenerators mit tiefen Nuten für die Leiterstäbe oder - spulen umfasst. Besonders vorteilhaft ist es, wenn die Kerben radial innen in einer Entlastungsöffnung enden.

Eine erste bevorzugte Ausführungsform der Erfindung ist dadurch gekennzeichnet, dass am Stator-Blechkörper die doppelte Anzahl Kerben wie Nuten für die Statorwicklung angeordnet sind, wobei die Kerbtiefe in der Grössenordnung von 20% der Jochhöhe liegt.

Eine zweite bevorzugte Ausführungsform des erfindungsgemässen StatorBlechkörpers zeichnet sich dadurch aus, dass die Anzahl Nuten und Kerben am Stator-Blechkörper gleich ist, wobei die Kerbtiefe in der Grössenordnung von 40% der Jochhöhe liegt.

Besonders bevorzugt ist eine Breite der Kerben von etwa 0,5mm bis 1mm.

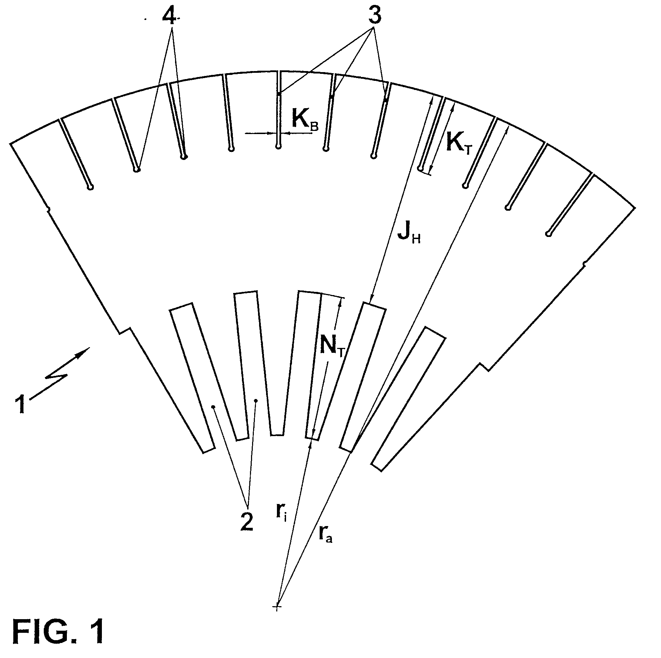

### KURZE ERLÄUTERUNG DER ZEICHNUNG

Die Erfindung soll nachfolgend anhand von Ausführungsbeispielen im Zusammenhang mit der Zeichnung näher erläutert werden. Die einzige Figur zeigt in vereinfachter Darstellung ein bevorzugtes Ausführungsbeispiel für die den erfindungsgemässen Stator-Blechkörper bildenden Blechsegmente.

Es sind nur die für die Erfindung wesentlichen Teile dargestellt und bezeichnet.

### WEGE ZUR AUSFÜHRUNG DER ERFINDUNG

In der Figur ist ein bevorzugtes Ausführungsbeispiel für ein Blechsegment (1) gezeigt, dass typischerweise an seiner radialen Innenseite mit Nuten 2 zur Aufnahme einer hier nicht dargestellten Statorwicklung versehen ist. Eine grosse Anzahl solcher Blechsegmente 1 sind sowohl in Umfangsrichtung sowie in axialer Richtung - also senkrecht zur Zeichnungsebene - nebeneinander angeordnet, und bilden in ihrer Gesamtheit einen ebenfalls nicht dargestellten Stator-Blechkörper. Die Ausrichtung aller Blechsegmente 1 erfolgt derart, dass die Nuten 2 fluchtend zueinander angeordnet sind.

Erfindungsgemäss sind die Blechsegmente 1 an ihrer radialen Aussenseite mit einer Anzahl Kerben 3 versehen, die eine Breite K_{B} zwischen 0,5mm und 1mm aufweisen und axial zueinander fluchtend angeordnet sind. Die Kerben 3 enden radial innen in einer sogenannten Entlastungsöffnung 4. Die Kerben 3 sind mit Luft gefüllt.

Ein Stator-Blechkörper, aufgebaut aus den beschriebenen Blechsegmenten, zeigt besonders gute mechanische Eigenschaften in Verbindung mit optimalen magnetischen Eigenschaften bei der Verwendung in einem Hochspannungsgenerator, der beispielsweise mit Betriebsspannungen von 400kV und mehr betrieben wird. Hierfür müssen im Vergleich zu herkömmlichen Generatoren mit Betriebsspannungen von 20kV-30kV eine grössere Anzahl Windungen einer Statorwicklung in eine Nut 2 mit entsprechend grosser Tiefe N_{T} eingelegt werden. Wie bereits in der Einleitung diskutiert wurde, muss die Jochhöhe J_{H} - das ist das Mass zwischen Nutgrund der Nut 2 und dem Aussenradius rₐ -für einen sicheren Betrieb unter üblicher mechanischer Schwingbelastung entsprechend gross sein.

Hier setzt nun die Erfindung ein, ohne die die Jochhöhe J_{H} im Hinblick auf die betriebsbedingten Schwingungen massgeblich zu vergrössern wäre. Dies wäre eine Massnahme, die sowohl hinsichtlich des stark ansteigenden Gewichtes, sowie hinsichtlich einer unwirtschaftlichen Transportgrösse unerwünscht ist. Die Erfindung ermöglicht nun, die Jochhöhe J_{H} im wesentlichen unter magnetischen Gesichtspunkten auszulegen, das heisst, eine kleinere Jochhöhe J_{H} vorzusehen als unter Betrachtung der mechanischen Festigkeit im Betrieb nötig wäre.
Ein erstes typisches Zahlenbeispiel soll die Erfindung näher erläutern:
   Legt man den Stator-Blechkörper eines Hochspannungsgenerators nur nach magnetischen Gesichtspunkten aus, so ergibt sich eine Nuttiefe N_{T} von etwa 600mm, eine Nutbreite N_{B} von 60mm, eine Jochhöhe J_{H} von 500mm und ein Jochaussendurchmesser rₐ von 3600mm. Eine derartige, magnetisch korrekte Auslegung würde bei einem zweipoligen Hochspannungsgenerator herkömmlicher Art eine 4-Knoten-Schwingung hervorrufen mit einer Amplitude von etwa 150µm bei 95Hz. Dabei ist die Anregungsfrequenz 100Hz. Diese Betriebswerte sind unzulässig.
   Die erfindungsgemässe Anordnung von am Aussenumfang periodisch verteilt angeordneten radialen Kerben 3 senken die 4-Knoten-Schwingungen auf eine Amplitude von etwa 50µm bei 70Hz. Diese Werte sind unter Betriebsbedingungen unkritisch. Die Anzahl Kerben 3 ist dabei 72, was doppelt soviel ist, wie die Anzahl Nuten 2. Die Kerbtiefe K_{T} liegt in der Grössenordnung von 100mm, womit die Kerbtiefe K_{T} in der Grössenordnung von 20% der Jochhöhe J_{H} liegt.
Eine zweite Lösung der Erfindung zeigt sich in dem folgenden Beispiel:
   Bei gleichen geometrischen Abmessungen des Aussendurchmessers rₐ, der Nuttiefe N_{T} und der Jochhöhe J_{H} bewirkt eine gleiche Anzahl von am Aussenumfang gleichmässig verteilter Kerben 3 wie die Anzahl Nuten 2 eine gleich gute Reduktion der mechanischen Schwingbelastung wie oben beschrieben, wenn die Kerben 3 grössenordnungsmässig 200mm tief sind. In diesem Fall ist die Kerbtiefe K_{T} in der Grössenordnung von 40% der Jochhöhe J_{H}.

Wesentlich tiefere Kerben 3 als die in den beiden Ausführungsvarianten gezeigten, lassen die Schwingungsamplituden wieder ansteigen, wegen dem zunehmenden Anteil an statischer Verformung.

Die Funktion der Entlastungsöffnungen 4 ist bei den gezeigten erfindungsgemässen Lösungen gleich. Hiermit wird ein unerwünschtes Ausreissen im Kerbgrund der Kerben 3 unter betriebsbedingter Schwingungsbelastung verhindert.

Selbstverständlich ist die Erfindung nicht auf die gezeigten Ausführungsbeispiele beschränkt. So ist beispielsweise auch eine andere Kombination aus der Anzahl Nuten zur Anzahl Kerben denkbar, wobei dann auch die Kerbtiefe entsprechend anzupassen ist.

### BEZEICHNUNGSLISTE

- 1: Blechsegment
- 2: Nut
- 3: Kerbe
- 4: Entlastungsöffnung
- rₐ: Aussenradius
- rᵢ: Innenradius
- N_{T}: Nuttiefe
- K_{T}: Kerbtiefe
- K_{B}: Breite der Kerbe 3
- J_{H}: Jochhöhe

## Patentansprüche

1. Stator-Blechkörper für eine elektrische Maschine, insbesondere Turbogenerator, welcher Stator-Blechkörper aus einer Vielzahl von Blechsegmenten (1) aufgebaut ist, wobei jedes Blechsegment (1) auf seiner radialen Innenseite mit Nuten (2) zur Aufnahme von Leiterstäben oder Leiterspulen einer Statorwicklung versehen ist,
dadurch gekennzeichnet,
dass jedes Blechsegment (1) auf seiner radiaien Aussenseite mit periodisch verteilten Kerben (3) versehen ist, wobei die Kerben (3) von axial benachbarten Blechsegmenten im Stator- Blechkörper fluchtend zueinander angeordnet sind.

2. Stator-Blechkörper nach Anspruch 1,
dadurch gekennzeichnet,
dass die Kerben (3) an ihrem radial innenliegenden Ende in einer Entlastungsöffnung (4) enden.

3. Stator-Blechkörper nach Anspruch 1 oder 2,
dadurch gekennzeichnet,
dass die Anzahl der Kerben (3) doppelt so gross ist, wie die Anzahl Nuten (2).

4. Stator-Blechkörper nach Anspruch 3,
dadurch gekennzeichnet,
dass die Kerbtiefe K_{T} in der Grössenordnung von 20% der Jochhöhe J_{H} liegt.

5. Stator-Blechkörper nach Anspruch 1 oder 2,
dadurch gekennzeichnet,
dass die Anzahl der Kerben (3) gleich gross ist, wie die Anzahl der Nuten (2).

6. Stator-Blechkörper nach Anspruch 5,
dadurch gekennzeichnet,
dass die Kerbtiefe K_{T} in der Grössenordnung von 40% der Jochhöhe J_{H} liegt.

7. Stator-Blechkörper nach einem der vorhergehenden Anprüche,
dadurch gekennzeichnet,
dass die Kerben (3) eine Breite zwischen 0,5mm und 1mm aufweisen.
